# EUROPEAN PATENT SPECIFICATION

(11) **EP 2 821 546 B1**
(45) Date of publication and mention of the grant of the patent: **09.08.2017**
(21) Application number: 14174882.2
(22) Date of filing: 30.06.2014
(51) Int. Cl.: D06N 3/00, D06N 3/14, C09D 175/04

(54) **Process for the production of polymeric film/leaf articles and relative apparatus**
Verfahren zur Herstellung von Polymerfolien/Blattartikeln und entsprechende Vorrichtung
Procédé pour la production d'articles à lames/film polymérique et appareil associé

(30) Priority: 01.07.2013 IT MI20131101
(43) Date of publication of application: 07.01.2015
(73) Proprietor: N.T.T. S.r.l., 21054 Fagnano Olona (VA) (IT)
(72) Inventor: Moioli, Adriano, 24027 Nembro (BG) (IT); Borri, Mario, 21052 Busto Arsizio (VA) (IT)
(74) Representative: De Gregori, Antonella

(56) References cited:
- WO-A1-2013/041397
- US-A- 3 330 713
- US-A- 3 539 424
- US-A- 3 770 481
- US-A- 3 891 785
- US-A- 3 945 981
- US-A1- 2008 214 727

## Description

The present invention relates to a process without solvent for the production of polymeric film articles or composites and related apparatus.

Said innovative process allows the achievement of film structures through techniques from bi-component or multicomponent mixtures allowing to achieve the superimposition of several layers of polymeric material without solvent, which shall not be confused with processes/systems defined blocked isocyanates or 100% of dry stuff, improperly called without solvent or solvent free, but that actually are not zero emission solvent systems.

The polymeric layer can be for example linked to a flexible substrate, or directly, or through intermediate layers.

The film structures thus achieved find application, depending also on the support used, in all the fields of traditional spreading and due to their intrinsic features in innovative applications.

The known processes to the state of the art for the achievement of this type of materials provided the spreading of resins dissolved in a solvent on a fabric or on a support of various kind.

The "mixtures" for the traditional spreading can arrive at containing up to 70-80% of solvents more or less toxic. This means that in all the processing phases, dispersions of vapours of solvent are unavoidable both inside and outside the plant.

In fact, in the state of the art, the main phases of the process in which solvent dispersions in the environment occur or may occur are so summarized: the phase of preparation of the starting mixture (dissolution of the resins in the solvent, dosage of the various components of the mixture and mixing) which, due to the frequency of refilling operations, requires the arrangement of special rooms however equipped with natural and/or forced aeration; the spreading phase in which significant amounts of solvent vapours are not captured by proper catching systems; the phase of drying wherein the products spread are dried in a hot-air tunnel and the polluted air with the solvent vapours must be continuously sucked and expelled.

The presence of solvent implies therefore many drawbacks, both with reference to the features of the end-product, and mostly with reference to the features of the process and of the plant. It is, indeed, necessary to provide devices and systems for the control of emissions of solvent during all the phases of the process, for removal of the solvent from the end-product and for the removal of the exhausted solvent. In particular the systems of reduction/depuration of the expelled air, even the most efficient ones as the catalytic post-burners, do not have 100% yields and therefore it is never possible to completely avoid the dispersion of vapours of solvents. The same reduction system, in turn, produces the emission of volatile organic substances constituted by combustion/oxidation residues (CO₂, etc.).

Processes and plants providing the presence of solvent are thus characterized by high energetic costs, by a high hydric consumption connected with the requirement to use water in the phases of cooling of the products living the drying kilns and in the reduction plants and by a high environmental impact especially connected with energy consumption, to wastewaters, to the emission of solvents or combustion residues in the atmosphere, to production waste, in particular the "scraps" of mixtures containing considerable amounts of solvent.

For the achievement of film structures is therefore particularly felt the need of identifying processes running without the use of solvents, both in the raw materials and in the various phases of the production process, having therefore a smaller environmental impact, less expensive and more versatile.

An example of document disclosing a process running with the use of solvents is US 3,770,481, while examples of documents disclosing processes running with or without the use of solvents are US 3,539,424, US 2008/214727, WO 2013/041397, US 3,945,981 and US 3,891,785.

Said documents disclose continuous processes for making a polyurethane film/fabric laminate comprising preparing a two-component mixture (polyisocyanate and polyol), spreading it on a release layer, applying a fabric on it, crosslinking at a temperature between 50 and 200°C for a time between 30 seconds and 10 minutes, removing the release layer and rolling up the product.

A purpose of the present invention is that of providing a process with a very small or null environmental impact (not presenting emissions of solvent neither direct, nor indirect and being characterized by a very small consumption of water), with a great reduction of energetic consumptions with respect to the conventional processes and plants and with a great reduction of investment costs and plant management, thus with a significant economic advantage.

A further purpose of the present invention is that of providing high quality film/leaves or composites, extremely versatile and provided with features and applications which are impossible for the products obtained through the processes according to the state of the art. Subject-matter of the present invention is therefore a process in continuous for the production of film/leaves or composites comprising the following steps:
a) preparation of a bi-component mixture to spread and feeding of the mixture to the spreading phase wherein the mixture is prepared, fed and disposed in continuous, in the pot-life time of the mixture itself;
b) spreading of the mixture on at least a substrate wherein the spreading of the substrate and the conveyance to the phase of crosslinking are completed in the pot-life time of the mixture;
c) crosslinking of the substrate of mixture on said substrate carried out under static conditions of the environment, wherein air in motion is not present and mechanical vibrations are absolutely absent, and at a variable temperature comprised between 50°C and 100°C, with control of the temperature values of the coated product carried out in continuous and wherein the conveyance of the spread substrate during the crosslinking phase is achieved with the substrate spread under conditions of flatness.

A further subject-matter of the present invention is an apparatus for the production in continuous of film/leaves or composites comprising a system of mixing and feeding of a mixture to be spread; a system of spreading of the mixture on at least a substrate, a conveyance system and a crosslinking system, said apparatus being characterized in that the crosslinking system is a static crosslinking chamber wherein air in motion is not present and mechanical vibrations are absolutely absent and the conveyance system, which feeds to the crosslinking system and transports along the crosslinking system the substrate spread with the mixture coming from the spreading system, is a planar conveyor belt.

The base components of the mixtures/resins used in the process according to the present invention are selected from bi-component polyurethane thermosetting and/or thermoplastic resins.

In the present description a substrate is whichever material on which it is possible to spread the bi-component mixture such as for example paper, polyester in film/leave, polyolefins, fabrics of whichever nature, non-woven fabrics, metals such as for example aluminium.

In the present description a support release is whichever substrate capable to release the film/leave or the composite, at the end of crosslinking.

In the present description a fabric is whichever fabric in the classical sense of the term, but also a non-woven fabric, glass fibres.

Step a) of preparation of the bi-component mixture to be spread and feeding of the mixture to the step of spreading is achieved in continuous and the mixture is prepared, fed and disposed in continuous from the spreading phase, in the pot-life time of the mixture itself, thus preventing from phenomena of pre-crosslinking.

It is clear that in the mixing and feeding step of the bi-component mixture, the control of times and quantities is of key importance: the optimum situation occurs when the mixture used presents a high pot-life and a low time of crosslinking.

Step a) can provide the feeding of a bi-component mixture in amount ranging from 50 g a minute to 100 kg a minute and a pot-life of the mixture ranging from 30 seconds to 10 minutes.

In the present description, the term pot-life means the time of processability of the mixture before the effects of crosslinking occur.

According to the type of mixture to prepare, bi-component or multicomponent, of the desired colour (with or without pigment) and of possible further features of the resin, the necessary raw materials are mixed and fed to the head of spreading.

The several components are stored, when required, in proper tanks for dehumidification and deaeration, as well as are provided tanks for pigments and additives of various kind. Through proper mixers, pumps, preferably volumetric, commercial filters and tubes, which must be managed by means of dedicated software, it is possible to prepare and feed the mixture.

The diameters and types of the several elements constituting the feeding system can be changed according to the resin used, of the amount of resin, of the velocity of production of the width of spreading.

This type of feeding allows a high versatility, allowing to manage change of productions with extreme speed, to provide reduced productions, and can be used for feeding one or more heads of spreading.

More precisely, the feeding system of the mixture at the head/s of spreading achieves a continuous and uniform feeding along the whole width of spreading of the support, namely for a width reaching up to 6000 mm.

The process and the apparatus according to the present invention can be used, as previously indicated, with a great variety of raw materials provided with features much different from each other.

The mixing and feeding system of the plant according to the present invention allows to vary the whole volumes of the mixture/resin supplied (according to the required ratio), increasing or decreasing them during their processing in continuous. In this way the operator is able to adjust in a very quick and precise manner the quantity of mixture reaching the spreading system and, more precisely, to the spreading element, both according to the working conditions on the full line of production, and according to the behaviour of the mixture which can be changed depending on several environmental factors.

Step b) of spreading of the mixture on at least one substrate provides that the spreading on the substrate and the conveyance to the crosslinking phase are completed in the pot-life time of the mixture.

Such step b) of spreading is carried out in continuous and in full synchrony with the phase of mixing and feeding of the mixture.

Indeed, as previously observed, the feeding of the mixture to the head/s of spreading has to be achieved through the feeding of volumes such as to allow a continuous and uniform feeding along the whole width of spreading of the support, namely for a width reaching up to 6000 mm, concurrently allowing the spreading element to spread and dispose in continuous all the mixture fed, in the pot-life time of the mixture itself, preventing from phenomena of pre-crosslinking.

The spreading system preferably consists of a doctor blade coating or a cylinder system.

The phase of spreading provides the coating through said doctor blade or cylinder system of the mixture fed on a proper support.

When the end product requires as substrate the use of a fabric, it is at first achieved the coating phase of the mixture on a release support and then coupling to the fabric is carried out in a coupling unit, wherein the fabric is in tension and is coupled to the mixture at the opposite side with respect to that of the release support, being said release support then removed.

In particular, the apparatus subject-matter of the present invention allows to use the fabric in two different modes:
A) Fabric totally impregnated with resin;
B) Fabric floating on resin;

Mode B) is a common method in the preparation of fabric/resin articles, mode A), instead, is very hard to achieve and is practically unachievable through the technologies and the resins up to date used.

With regard to mode A), that is, the total impregnation of the fabric with resin, according to this specific embodiment, the coupling unit does not provide the coupling calender, but a completely different arrangement from a whichever traditional coupling unit. Such a condition derives on one side from the requirement to manage the deposit phase of the fabric on the mixture/resin already deposited on the release support and on the other side from the requirement to avoid whichever contact of the various parts of the machine with the resin. Indeed, the nature of the mixtures/resins and the features of the process according to the present invention, in which such phase occurs with the resin still in the fluid phase, would cause dirtying of the machine with a consequent damage of the fabric, said situation leading quickly to interrupt the processing to carry out the necessary complicated cleaning operations.

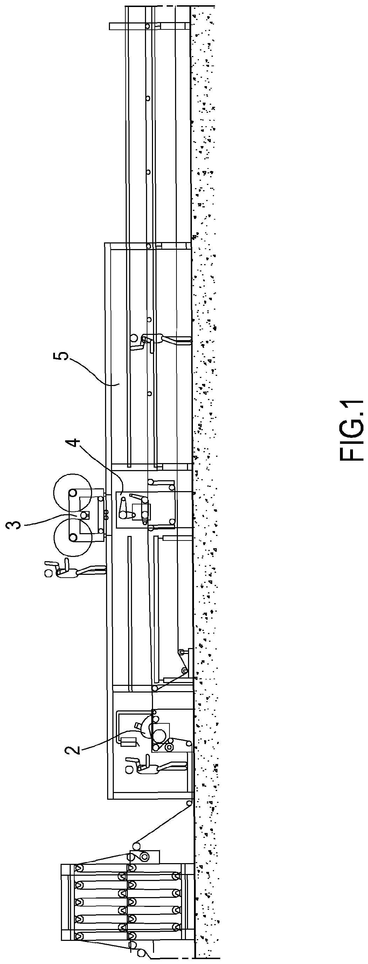

More precisely the arrangement of the coupling unit of the apparatus according to the present invention, when necessary to carry out the coupling to the fabric, provides that the film or leave, composed of the release support on which it has been already spread the resin or mixture, is mechanically enforced to complete an angle between sliding plane of the support and coupling cylinder, said cylinder, when required, being lifted at a higher level with respect to said sliding plane. The plane of the cylinder accompanying the fabric is inserted between these two planes and precisely between the sliding plane of the release support and the lower plane of the coupling cylinder, allowing thus safe deposit of the fabric on the mixture or resin, without that the same gets in contact with any mechanical part of the machine, and in an almost full absence of direct pressure, as shown into figure 1, items 3 and 4.

For mode B), the coupling apparatus is placed at the end of the crosslinking phase, before final wrapping of the product.

The parts of the apparatus which necessarily get in contact with the mixture/resin, such as the doctor blade and the spreading element, are suitably treated for example by Teflon coating or other non-stick treatments.

A key feature of the process according to the present invention is also the transport to the crosslinking phase and during the crosslinking phase of the substrate coated with the mixture carried out with the substrate spread under flatness conditions.

Said flatness condition is achieved in the apparatus according to the present invention preferably by use of a conveying belt as line of conveying, belt on which it lies the substrate coated with the mixture and through an optimum management of tension ranging from 50 kg to 800 kg and more, applied to the substrate.

Said solution is absolutely innovative with respect of the conventional lines of spreading which are equipped with simple supporting cylinders.

Opposite to the conventional spreading lines, the process and the apparatus according to the present invention, running in continuous and in the absence of solvent, to obtain a film/leave or composites with the peculiarity of the desired end-product, shall take into due account the rheological behaviour (viscosity) of the mixture in the phase of transport to, and during the subsequent phase of, crosslinking. Indeed, in the moment in which the mixture begins to heat, it tends to get fluid and therefore a whichever situation of non-perfect flatness in the transport leads to a non-uniform distribution of the mixture on the substrate and, consequently, to obtain an end-product not presenting the desired properties/features. Step c) of crosslinking of the layer of mixture on the substrate is carried out under static conditions of the environment, at a temperature which may vary from 50°C to 100°C, with control of the temperature of the coated product carried out in continuous; the phase of crosslinking occurs in a time comprised between 30 seconds and 10 minutes.

More precisely, the crosslinking phase in the process according to the present invention shall be carried out under static conditions of the environment, wherein static conditions means that air in motion in the crosslinking chamber is not present and there is absolute absence of mechanical vibrations. Said condition is apparently impossible in conventional spreading lines wherein it is necessary to provide the removal of solvent, whereas it is absolutely optimal in the process according to the present invention where it allows to take account of the rheological behaviour of the mixture/resin and allows to obtain end-products which cannot be obtained through conventional spreading processes.

Said condition is not therefore achievable in conventional kilns which are always ventilated kilns.

In the crosslinking chamber, still through a flat transport system, preferably a belt, the temperature on the surface of the spread product is regulated in continuous.

In the crosslinking chamber/s, the polymer is kept at controlled temperature preferably through IR lamps.

The handling of IR lamps in the crosslinking chamber/s distinguishes from the systems normally in use, regulated in power (the traditional potentiometers which work by increasing the temperature and thus varying the frequency in an undetermined manner and not ensuring to fall within the frequency range of adsorption of polyurethane, in the case of the present invention).

The IR lamp system is handled instead with a controlled frequency: the irradiation is concentrated in the frequency range of maximum specific adsorption of polyurethane, determined by means of spectroscopic examination. Concentrating the irradiation, using only or mainly the frequency range adsorbed by polyurethane, allows increasing the efficiency of crosslinking and, at the same time, allows a significant energy saving, in that it is avoided to irradiate at frequencies which are reflected or which cross polyurethane with no effect, dispersing uselessly energy. In the embodiment according to the present invention, the temperature of the IR lamps and therefore the frequency (directly connected with each other) are pre-established: the control of temperature of the polymer occurs by increasing or decreasing the radiating surface of IR lamps achieved on purpose.

Said control of temperature is crucial both for regulating the crosslinking phase and for achieving an optimum energy saving.

Indeed, said regulation in continuous of the coated product temperature allows to control as a consequence also the temperature in each single zone of the crosslinking chamber, taking into account the heat produced by the exothermal reaction of crosslinking and optimizing thus the energy consumption with respect to a conventional spreading process in the presence of a solvent.

Moreover, the control of the temperature on the coated product usually is not carried out in conventional processes, wherein only the temperature of the air in the drying kiln is controlled, in which the end-product to be dried is introduced.

The full crosslinking of the materials may occur in two phases: a first and main crosslinking phase occurs during the production phase in the polymerization chamber, a second crosslinking phase and stabilization occurs in a natural manner under room temperature on the product already wrapped in coil.

The first crosslinking phase is carried out for a time comprised between 30 seconds and 10 minutes, that time ranging however also according to the reactivity of the product, and corresponds to the time necessary to allow the mixture spread on the substrate to crosslink completely.

Basing on said time the production speed is controlled and consequently the travelling time of the crosslinking chamber.

In some cases therefore the material, such as it leaves the crosslinking chamber (first crosslinking phase) can undergo a further phase of crosslinking and stabilization after wrapping of the product in coil at room temperature, for the required time to complete crosslinking itself.

The times of these phases can be optimized according to the reactivity of the type of mixture.

In the case of an apparatus for the production in continuous of film/leaves or compounds according to the present invention which provides two or more spreading heads, it is possible to provide among all the sections one or more accumulators, which act as a buffer, capable to adsorb small variations of speed among the various sections for control of single heads, setups possibly required during processing, without being forced to interrupt therefore the process in continuous.

Usually, in the conventional processes, this type of accumulators is provided only at the head or at the end of the plant.

At the exit of the plant, the film/leave or composite thus produced is wrapped in coil, ready for storage for subsequent processing.

The present invention will be now described in an illustrative but not limitative manner, according to its preferred embodiments with particular reference to figure 1 annexed, wherein:
figure 1 represents a schematic view of an embodiment of a section of the apparatus for the production in continuous of film/leaves or composites according to the present invention.

More precisely, figure 1 is a schematic view of a section of the apparatus according to the present invention, wherein in 2 is highlighted the section of feeding and spreading of the mixture, in 3-4 the section of coupling of the fabric to the substrate or support, in 5 the section of crosslinking and related belt.

A key advantage of the process according to the present invention is that of being carried out in continuous with no use of solvent. It is therefore characterized by an environmental impact equal to zero: following to the full removal of the solvents of the raw materials and of the processing phases of the process itself, there are neither direct emissions, nor indirect emissions of solvent in the workplace and in the external environment.

A further advantage is that the end-products are absolutely free of traces of solvent.

The process according to the present invention presents also the advantage of not using water in the production process.

Also the production scraps of the process according to the present invention consist of inert residues which do not contain solvents.

The process and the apparatus according to the present invention have then the unquestionable advantage of presenting much reduced energetic consumptions: indeed, from the full removal of solvents from the production process derives the removal of each plant of solvent reduction, of the drying kilns, of thermal power plants, diathermic oil circuits, etc.

Further energy saving are then connected with the fact that the apparatus according to the present invention does not require times of pre-heating and therefore it turns on and turns off in an almost immediate manner for the only real working time.

In its whole, an apparatus according to the present invention allows a global energy saving (fuels and electricity) more than 50%, with respect to energy consumptions of a plant of conventional spreading providing a thermal power station, drying kilns and reduction plants.

In particular, thanks to the particular production process subject-matter of the present invention, the film/leave or composite which can be obtained is extremely versatile and provided with adjustable features: it is obtained, indeed, film/leaves or composites with a range of "hardness" varying from extremely soft and elastic products to extremely hard and rigid products; moreover, as said, by means of formulation adjustments directly achievable during production, it can be produced film/leaves or composites with a wide range of special features such as self-extinction, anti-staticity or conductivity, magnetism, opacity to X rays, resistance to UV, resistance to solvents, resistance to high temperatures, absence of porosity, expanded foils and still other features, present singularly or contemporaneously, and with a different grade.

The film/leaves or composite thus achieved find application in a multiplicity of end-products in various fields such as, merely with an illustrative purpose:
medical field: achievement of a radiopaque foil (lead-free) for protection from X rays, for example for gowns and other protective devices for staff and patients;
   environmental shielding and insulation of radiograph apparatuses;
   other sterilizable devices in autoclave: waterproof towels, mattress toppers, etc.
safety: radiopaque foil for shielding of apparatuses, for control of luggage in the airports, ports and other sensitive buildings and for protection of the staff involved;
   applications of quality control of production in the industry and protection of the staff involved;
ecology: floating barriers resistant to chemical and oil products, flexible tanks for polluting products;
marine: inflatable fabrics for inflatable boats, life rafts, flexible tanks for water, protection coatings;
building industry: coatings, paving, textile architecture, sound insulation;
furniture: synthetic leather (with considerable resistance to abrasion), accessories;
apparel: footwear, accessories;
automobile: coatings and protections;
civil protection: structures of emergency shelter also with inflatable support, flexible tanks for water and fuels.

As an illustrative, but not limitative, example of the present invention, it is herewith reported an example relating to the preparation of a coated article according to the present invention.

### Example 1

### Achievement of a coating resistant to 180°C

It has been achieved an article with a weight of 450 grams per m², consisting of 250 grams of resin and 200 grams of fabric as support.

The resin, composed 70% by weight of component A and 30% by weight of component B, has been prepared by mixing of the two components A and B in the system of mixing and feeding to the spreading system.

Component A, composed of 95 parts by weight of polyol and 5 parts by weight of pigment, has been then mixed in weight ratio 70:30 with component B which is a isocyanate pre-polymer. More precisely, component A is composed 95% by weight of DIMERDIOL and 5% by weight of carbon black dispersed in polyether polyol, whereas component B is a pre-polymer based on dicyclohexylmethane-4,4'-diisocyanate.

The mixture thus obtained has been then spread on a paper support of the known type in the field of spreading of polyurethanes.

Before crosslinking occurs, it has been carried out coupling to a polyester fabric (title 1100 dtex plain weave), according to the process as above described. More precisely the resin has been spread on the paper support, the resin/release support system thus obtained has been coupled to the mixture coupled to the fabric in a coupling unit, wherein the fabric put in tension has been coupled to the mixture supported on the paper support, on the side opposite to that of the paper support, being said paper support then removed.

The article thus prepared has been inserted in continuous in the polymerization chamber wherein it has been subjected to crosslinking sufficient to allow its wrapping in coil.

The pot-life of the mixture fed to the spreading system is of three minutes at room temperature, crosslinking has been carried out in four minutes at 90°C.

The coil of the product has been then maintained wrapped for two days at room temperature to allow the achieving of full crosslinking and thus the achieving of the optimum characteristics of the coated product. If necessary, such a final crosslinking can be speeded up by storage in hot chamber.

The product thus obtained presents:
- High resistance to temperature (20 minutes at 180°C, no change)
- High resistance to abrasion measured according to ISO 5470-1(MOLA CS17, PESO 500GR, CICLI 1000) with a weight loss lower than 0,01%;
- Absence of porosity measured according to ISO 811: (water column 1000 cm)
- Optimum resistance to solvents and hydrocarbons in general
- Low adhesiveness in contact with sticky materials (such as for example hot bitumen).

## Claims

1. A process in continuous for the production of film/leaves or a composite which comprises the following steps:
a) preparation of a two-component mixture to be spread, and feeding of the mixture to the spreading/coating phase, wherein the mixture is prepared, fed and disposed in continuous, in the time of pot-life of the mixture itself;
b) spreading/coating of the mixture on at least one substrate wherein the spreading on the substrate and the transport to the crosslinking step are completed in the time of pot-life of the mixture;
c) crosslinking of the layer of mixture on said substrate carried out in static conditions of the environment, wherein air in motion is not present and mechanical vibrations are absolutely absent, and at a temperature ranging between 50°C and 100°C, with control of the temperature value of the coated product made in continuous, wherein the transport of the spread substrate during the crosslinking step is made with the spread substrate under conditions of flatness.

2. A process according to claim 1, wherein the step a) of preparing the mixture to be spread and feeding of the mixture to the coating phase is made in continuous and the mixture fed is disposed continuously from the coating phase.

3. A process according to any one of the preceding claims, wherein step a) provides for the supply of a mixture in an amount ranging of from 50 g per minute to 100 kg per minute and the pot-life of the crosslinking time of the mixture varies from 30 seconds to 10 minutes.

4. A process according to any one of the preceding claims, wherein step b) of coating of the mixture on the substrate is carried out in continuous and in full synchrony with the step of mixing and feeding of the mixture.

5. A process according to any one of the preceding claims, wherein step b) involves the spreading of the resin on a support release, the coupling of the supported resin thus obtained with a fabric under tension, on the face opposite to that coupled with the support release, and the subsequent removal of the support release.

6. A process according to any one of the preceding claims, wherein step c) of crosslinking of the layer of mixture on the substrate is carried out with a control of the temperature of the coated product made in continuous, for a time between 30 seconds and 10 minutes.

7. A process according to any one of the preceding claims, wherein step c) of crosslinking of the layer of mixture on the substrate includes a first main phase of crosslinking in the polymerization chamber and a second phase of crosslinking and stabilization at room temperature on the product already wrapped in coil.

8. Apparatus for the continuous production of film/leaves or a composite that includes a system for mixing and feeding a mixture to be spread; a spreading/coating system of the mixture on at least one substrate, a transport system and a crosslinking system, said apparatus being **characterized in that** the crosslinking system is a static crosslinking room, wherein air in motion is not present and mechanical vibrations are absolutely absent, and **in that** the transport system, which feeds to the crosslinking system and carries along the crosslinking system, the substrate coated with the mixture coming from the spreading/coating system, is a planar conveyor belt.

9. Apparatus according to claim 8, wherein the coating/spreading system consists of a doctor blade coating apparatus or a cylinder system.

10. Apparatus according to any one of claims 8 or 9, wherein the spreading/coating system of the mixture on at least one substrate also comprises a coupling unit having an arrangement such as to mechanically force a film/leaf, made from a support release already coated with the mixture, to make an angle between the plane of sliding of said support and the lower plane of the coupling cylinder, and the plane of the cylinder accompanying a second substrate, preferably cloth, is inserted between these two planes.

## Patentansprüche

1. Kontinuierliches Verfahren für die Herstellung von Folien/Blättern oder eines Verbunds, welches die folgenden Schritte umfasst:
a) Zubereiten einer auszubreitenden Zwei-Komponenten-Mischung und Zuführen der Mischung in die Ausbreitungs-/Beschichtungsphase, wobei die Mischung in der Topfzeit der Mischung kontinuierlich zubereitet, zugeführt und angeordnet wird;
b) Ausbreiten/Beschichten der Mischung auf wenigstens einem Substrat, wobei das Ausbreiten auf dem Substrat und der Transport zum Vernetzungsschritt in der Topfzeit der Mischung abgeschlossen werden;
c) Vernetzen der Mischungsschicht auf dem Substrat, ausgeführt unter statischen Umweltbedingungen, wobei keine Luftbewegung und keinerlei mechanische Vibrationen vorhanden sind, und bei einer Temperatur im Bereich zwischen 50°C und 100°C, unter Steuerung des Temperaturwerts des kontinuierlich beschichteten Produkts, wobei der Transport des ausgebreiteten Substrats während des Vernetzungsschritts mit dem ausgebreiteten Substrat unter Planheitsbedingungen vorgenommen wird.

2. Verfahren nach Anspruch 1, wobei der Schritt
a) des Zubereitens der auszubreitenden Mischung und des Zuführens der Mischung zur Beschichtungsphase kontinuierlich vorgenommen wird und die zugeführte Mischung von der Beschichtungsphase kontinuierlich angeordnet wird.

3. Verfahren nach einem der vorstehenden Ansprüche, wobei der Schritt a) das Zuführen einer Mischung in einer Menge vorsieht, die im Bereich zwischen 50 g pro Minute und 100 kg pro Minute liegt, und die Topfzeit der Vernetzungszeit der Mischung zwischen 30 Sekunden und 10 Minuten variiert.

4. Verfahren nach einem der vorstehenden Ansprüche, wobei der Schritt b) des Beschichtens der Mischung auf dem Substrat kontinuierlich und vollkommen synchron mit dem Schritt des Mischens und Zuführens der Mischung ausgeführt wird.

5. Verfahren nach einem der vorstehenden Ansprüche, wobei der Schritt b) das Ausbreiten des Harzes auf einem Träger-Release, das Verbinden des erhaltenen geträgerten Harzes mit einem unter Spannung stehenden Gewebe, auf der gegenüberliegenden Seite zu der, die mit dem Träger-Release verbunden ist, und das anschließende Entfernen des Träger-Releases betrifft.

6. Verfahren nach einem der vorstehenden Ansprüche, wobei der Schritt c) des Vernetzens der Mischungsschicht auf dem Substrat unter Steuerung der Temperatur des kontinuierlich beschichteten Produkts für eine Zeit zwischen 30 Sekunden und 10 Minuten ausgeführt wird.

7. Verfahren nach einem der vorstehenden Ansprüche, wobei der Schritt c) des Vernetzens der Mischungsschicht auf dem Substrat eine erste Hauptphase des Vernetzens in der Polymerisationskammer und eine zweite Phase des Vernetzens und Stabilisierens bei Raumtemperatur auf dem bereits auf Spulen gewickelten Produkt aufweist.

8. Vorrichtung zur kontinuierlichen Herstellung von Folien/Blättern oder eines Verbunds, die ein System zum Mischen und Zuführen einer auszubreitenden Mischung; ein System zum Ausbreiten/Beschichten der Mischung auf wenigstens einem Substrat; ein Transport- und ein Vernetzungssystem aufweist, wobei die Vorrichtung **dadurch gekennzeichnet ist, dass** das Vernetzungssystem ein statischer Vernetzungsraum ist, in dem keine Luftbewegung und keinerlei mechanische Vibrationen vorhanden sind, sowie dadurch, dass das Transportsystem, welches das Substrat, das mit der aus dem Ausbreitungs-/Beschichtungssystem kommenden Mischung beschichtet wird, dem Vernetzungssystem zuführt und entlang dem Vernetzungssystem trägt, ein planares Förderband ist.

9. Vorrichtung nach Anspruch 8, wobei das Ausbreitungs-/Beschichtungssystem aus einem Rakelbeschichtungsgerät oder einem Zylindersystem besteht.

10. Vorrichtung nach einem der Ansprüche 8 oder 9, wobei das System zum Ausbreiten/Beschichten der Mischung auf wenigstens einem Substrat ferner eine Verbindungseinheit umfasst, die eine Anordnung aufweist, derart, dass eine Folie/ein Blatt, die/das aus einem bereits mit der Mischung beschichteten Träger-Release hergestellt sind, mechanisch gezwungen ist, einen Winkel zwischen der Gleitebene des Trägers und der unteren Ebene des Verbindungszylinders vorzunehmen, und die Ebene des Zylinders, der ein zweites Substrat, vorzugsweise Stoff, begleitet, zwischen diesen beiden Ebenen eingefügt ist.

## Revendications

1. Procédé en continu pour la production de films/feuilles ou d'un composite qui comprend les étapes suivantes :
a) la préparation d'un mélange à deux composants destiné à être enduit, et l'alimentation du mélange vers la phase d'enduction/de revêtement, dans lequel le mélange est préparé, alimenté et disposé en continu, dans le temps de durée de vie du mélange lui-même ;
b) l'enduction/le revêtement du mélange sur au moins un substrat dans lequel l'enduction sur le substrat et le transport vers l'étape de réticulation sont achevés dans le temps de durée de vie du mélange ;
c) la réticulation de la couche de mélange sur ledit substrat exécutée dans des conditions statiques de l'environnement, dans lequel de l'air en mouvement n'est pas présent et des vibrations mécaniques sont absolument absentes, et à une température comprise dans la plage entre 50°C et 100°C, avec régulation de la valeur de température du produit revêtu effectuée en continu, dans lequel le transport du substrat enduit durant l'étape de réticulation est effectué avec le substrat enduit dans des conditions de planéité.

2. Procédé selon la revendication 1, dans lequel l'étape a) de préparation du mélange à enduire et d'alimentation du mélange vers la phase de revêtement est effectuée en continu et le mélange alimenté est disposé en continu à partir de la phase de revêtement.

3. Procédé selon l'une quelconque des revendications précédentes, dans lequel l'étape a) prévoit l'alimentation d'un mélange dans une quantité comprise dans la plage de 50 g par minute à 100 kg par minute et la durée de vie du temps de réticulation du mélange varie de 30 secondes à 10 minutes.

4. Procédé selon l'une quelconque des revendications précédentes, dans lequel l'étape b) de revêtement du mélange sur le substrat est exécutée en continu et en synchronisme total avec l'étape de mélange et d'alimentation du mélange.

5. Procédé selon l'une quelconque des revendications précédentes, dans lequel l'étape b) implique l'enduction de la résine sur un support de libération, l'accouplement de la résine supportée ainsi obtenue avec un tissu sous tension, sur la face opposée à celle accouplée au support de libération, et l'enlèvement successif du support de libération.

6. Procédé selon l'une quelconque des revendications précédentes, dans lequel l'étape c) de réticulation de la couche de mélange sur le substrat est exécutée avec une régulation de la température du produit revêtu effectuée en continu, pendant un temps entre 30 secondes et 10 minutes.

7. Procédé selon l'une quelconque des revendications précédentes, dans lequel l'étape c) de réticulation de la couche de mélange sur le substrat comprend une première phase principale de réticulation dans la chambre de polymérisation et une deuxième phase de réticulation et de stabilisation à température ambiante sur le produit déjà enroulé en bobine.

8. Appareil pour la production continue de films/feuilles ou d'un composite qui comprend un système pour mélanger et alimenter un mélange à enduire ; un système d'enduction/de revêtement du mélange sur au moins un substrat, un système de transport et un système de réticulation, ledit appareil étant **caractérisé en ce que** le système de réticulation est une chambre de réticulation statique, dans lequel de l'air en mouvement n'est pas présent et des vibrations mécaniques sont absolument absentes, et en ce quel le système de transport, qui alimente le système de réticulation et transporte le long du système de réticulation le substrat revêtu avec le mélange provenant du système d'enduction/de revêtement, est une bande transporteuse plane.

9. Appareil selon la revendication 8, dans lequel le système d'enduction/de revêtement consiste en un dispositif de revêtement à racle ou un système à cylindre.

10. Appareil selon l'une quelconque des revendications 8 ou 9, dans lequel le système d'enduction/de revêtement du mélange sur au moins un substrat comprend également une unité d'accouplement ayant un agencement adapté pour forcer mécaniquement un film/feuille, constitué d'un support de libération déjà revêtu avec le mélange, à former un angle entre le plan de glissement dudit support et le plan inférieur du cylindre d'accouplement, et le plan du cylindre accompagnant un deuxième substrat, de préférence un tissu, est inséré entre ces deux plans.
